# EUROPÄISCHE PATENTSCHRIFT

(11) **EP 1 027 744 B1**
(45) Veröffentlichungstag und Bekanntmachung des Hinweises auf die Patenterteilung: **18.12.2002**
(21) Anmeldenummer: 98952678.5
(22) Anmeldetag: 01.10.1998
(51) Int. Cl.: H01M 10/40, C07F 5/04, C07F 7/04, C07F 9/11, C07C 69/96, C07C 68/02, C07C 305/04

(54) **ESTER ALS LÖSUNGSMITTEL IN ELEKTROLYTSYSTEMEN FÜR Li-IONEN-AKKUS**
ESTER AS A SOLVENT IN ELECTROLYTE SYSTEMS FOR Li ION ACCUMULATORS
ESTER S'UTILISANT COMME SOLVANT DANS DES SYSTEMES D'ELECTROLYTE POUR ACCUMULATEURS AUX IONS DE LITHIUM

(30) Priorität: 02.10.1997 DE 19743748
(43) Veröffentlichungstag der Anmeldung: 16.08.2000
(73) Patentinhaber: BASF AKTIENGESELLSCHAFT, 67056 Ludwigshafen (DE)
(72) Erfinder: STERZEL, Hans-Josef, D-67125 Dannstadt-Schauernheim (DE); HESSE, Werner, D-67283 Obrigheim (DE); MÖHWALD, Helmut, D-76855 Annweiler (DE)
(74) Vertreter: Isenbruck, Günter, Dr.
(86) Internationale Anmeldenummer: EP9806237
(87) Internationale Veröffentlichungsnummer: WO99018625

(56) Entgegenhaltungen:
- EP-A- 0 599 534
- EP-A- 0 696 077
- EP-A- 0 704 922
- WO-A-97/16862
- WO-A-97/44842
- US-A- 4 690 942
- US-A- 5 210 322
- PATENT ABSTRACTS OF JAPAN vol. 098, no. 013, 30. November 1998 & JP 10 228928 A (DENSO CORP;ASAHI DENKA KOGYO KK), 25. August 1998
- PATENT ABSTRACTS OF JAPAN vol. 098, no. 012, 31. Oktober 1998 & JP 10 189038 A (MITSUI CHEM INC), 21. Juli 1998
- PATENT ABSTRACTS OF JAPAN vol. 098, no. 008, 30. Juni 1998 & JP 10 069818 A (SHOWA DENKO KK), 10. März 1998
- PATENT ABSTRACTS OF JAPAN vol. 009, no. 143 (E-322), 18. Juni 1985 & JP 60 023973 A (HITACHI MAXELL KK), 6. Februar 1985
- PATENT ABSTRACTS OF JAPAN vol. 097, no. 004, 30. April 1997 & JP 08 337792 A (KAO CORP), 24. Dezember 1996
- PATENT ABSTRACTS OF JAPAN vol. 006, no. 035 (C-093), 3. März 1982 & JP 56 154492 A (KUMIAI CHEM IND CO LTD), 30. November 1981
- PATENT ABSTRACTS OF JAPAN vol. 005, no. 062 (C-052), 25. April 1981 & JP 56 012398 A (KUMIAI CHEM IND CO LTD), 6. Februar 1981
- DATABASE WPI Section Ch, Week 7805 Derwent Publications Ltd., London, GB; Class C01, AN 78-09326A XP002101224 & JP 52 151729 A (TOHO CHEM IND CO LTD) , 16. Dezember 1977

## Beschreibung

Die vorliegende Erfindung betrifft die Verwendung spezifischer Ester der Bor-, Kohlen-, Kiesel-, Phosphor- und Schwefelsäure als Lösungsmittel in Elektrolytsystemen für Li-Ionen-Akkus, eine Zusammensetzung, die diese enthält, sowie diese Ester enthaltende Li-Ionen-Akkus.

Bislang werden in Li-Akkus als Lösungsmittel überwiegend Alkylether, wie z.B. Dimethylether und Alkencarbonate, wie z.B. Ethylencarbonat (EC) und Propylencarbonat (PC) verwendet. Derartige Systeme werden u.a. in der JP 08 273 700 und der JP 09 115 548 beschrieben.

Darüber hinaus sind auch Elektrolytlösungen auf der Basis verschiedener Ester bekannt.

So beschreibt die WO97/16862 eine Elektrolytlösung, die Borsäureester der folgenden allgemeinen Formeln (A) bis (D) enthält: 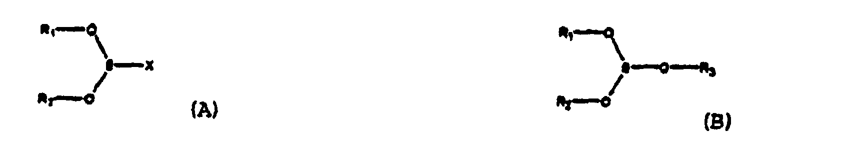 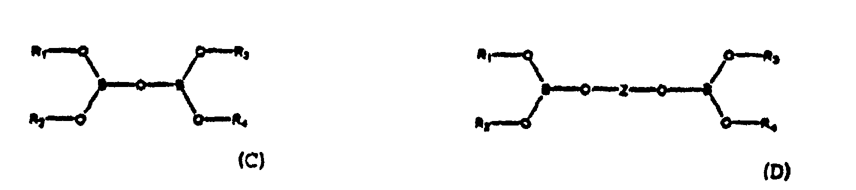 worin X ein Halogenatom ist, R¹, R², R³ und R⁴ geradkettige oder verzweigtkettige aliphatische oder aromatische Alkylgruppen sind, die mit Substituenten verschiedener Elektronegativität substituiert sein können und Z eine geradkettige oder verzweigtkettige aliphatische oder aromatische Alkyl- oder Siloxan-Gruppe darstellt.

Ein Elektrolytlösungsmittel für wiederaufladbare Lithium- und Lithium-Ionen-Batterien auf der Basis eines als BEG-1 bezeichneten Borsäureesters der folgenden Formel (E) in Kombination mit EC und/oder PC wird in J. Electrochem. Soc., 143, S. 4047-4053, 1996 beschrieben.

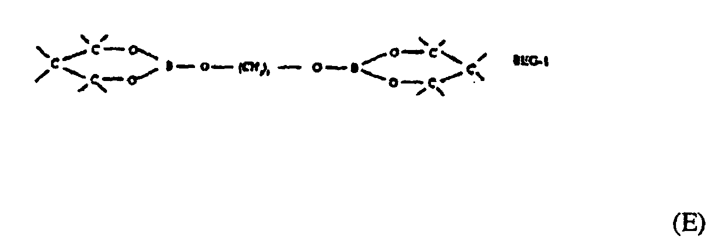

Die EP-B 0 599 534 beschreibt Carbonatverbindungen der folgenden Formel (F)

R¹-CH₂-O-CO-O-CH₂R² (F)

wobei R¹ ein Wasserstoffatom, eine Alkylgruppe oder eine durch ein oder mehrere Halogenatome substituierte Alkylgruppe ist und R² eine Alkylgruppe ist, die kein Wasserstoffatom in α-Stellung enthält oder eine Alkylgruppe, die substituiert ist durch ein oder mehrere Halogenatome und kein Wasserstoffatom in α-Stellung enthält, mit der Maßgabe, daß R¹ nicht mit R² identisch ist, ausschließlich der Verbindung C₂H₅-O-CO-O-CH₂-(CF₂)₄-H sowie deren Verwendung in einer nicht-wässrigen Elektrolytlösung.

Die EP-A 0 698. 933 betrifft eine nicht-wässrige Sekundärzelle, die eine spezifische Elektrolytlösung umfaßt, die u.a. Triester der Phosphorsäure der allgemeinen Formel (RO)₃P=O umfaßt, wobei die Gruppen R gleich oder verschieden sind und jeweils eine C₁- bis C₆-Alkylgruppe sind oder zwei RO-Gruppen zusammen mit dem Phosphoratom, an das sie gebunden sind, einen Ring bilden können. Derartige Phosphorsäurealkylester bzw. deren Verwendung in nicht-wässrigen Elektrolytlösungen und Sekundärzellen werden ebenfalls in der EP-A 0 696 077 beschrieben.

Die Verwendung von Phosphorsäureestern der allgemeinen Formel O=P(-O-(CH₂CH₂O)_{q}R²)₃, wobei n und q 1 bis 10 sind und R² eine C₁bis C₄-Alkylgruppe darstellt, als Elektrolyt in Zink-Batterien werden in der JP 07 161 357 beschrieben.

Weitere Phosphorsäureester mit Kohlenwasserstoffgruppen sowie deren Verwendung als Elektrolyt in Lithium-Ionen-Batterien werden in der JP 58 206 078 beschrieben.

Die JP 61 256 573 beschreibt einen Elektrolyt auf der Basis eines Polymers eines zumindest eine polymerisierbare Gruppe enthaltenden Phosphorsäureesters.

Wie sich aus der obigen Zusammenfassung des Standes der Technik ergibt, existieren bereits einige Elektrolytsysteme, die Ester auf der Basis von Bor-, Kohlen- oder Phosphorsäureestern umfassen. Die obenbeschriebenen Systeme werden jedoch den permanent wachsenden Anforderungen an derartige Elektrolytsysteme nicht oder nur unzureichend gerecht.

So sollen derartige Elektrolytsysteme über einen weiteren Temperaturbereich bei gleichzeitig niedrigem Dampfdruck in flüssiger Phase vorliegen. Sie sollen eine niedrige Viskosität aufweisen, um so eine ausreichend hohe Leitfähigkeit zu gewährleisten. Darüber hinaus sollen sie elektrochemisch und chemisch stabil sein und eine ausreichende Hydrolysebeständigkeit aufweisen. Ferner sollten derartige Lösungsmittel in der Lage sein, die Ionen der Leitsalze stark zu solvatisieren.

In Anbetracht des obigen Standes der Technik lag der vorliegenden Erfindung die Aufgabe zugrunde, neue Elektrolytsysteme für Li-Ionen-Akkus zur Verfügung zu stellen, die den wachsenden Anforderungen an diese Elektrolytsysteme gerecht werden. Somit betrifft die vorliegende Erfindung zusammensetzungen umfassend mindestens einen Ester der allgemeinen Formel (I) bis (V) 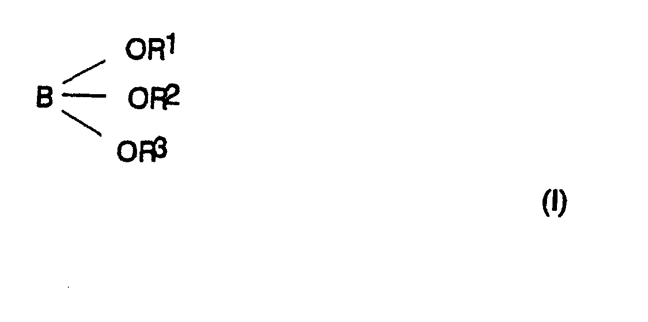 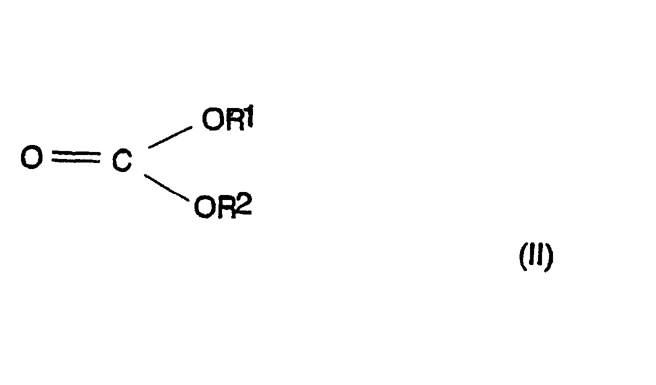 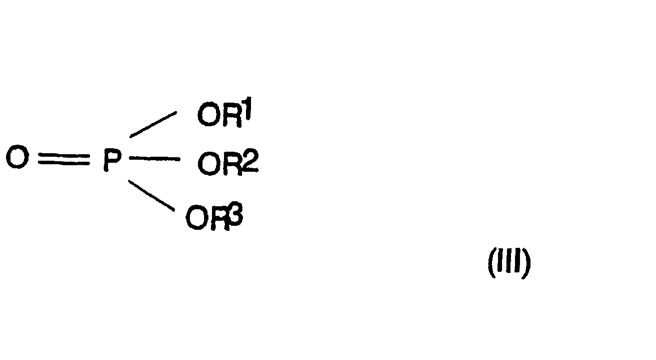 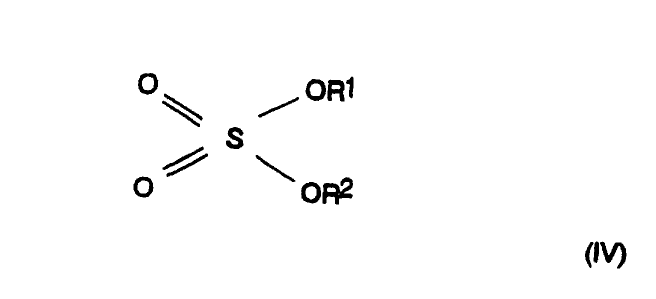 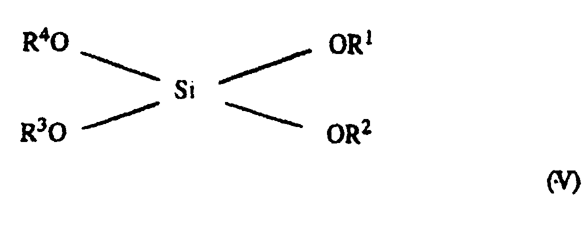 wobei R¹, R², R³, R⁴ gleich oder verschieden sind und jeweils unabhängig voneinander eine lineare oder verzweigtkettige C₁- bis C₄-Alkylgruppe, (-CH₂-CH₂-O)ₙ-CH₃ mit n=1 bis 3, eine C₃- bis C₆-Cycloalkylgruppe, eine aromatische Kohlenwasserstoffgruppe, die wiederum substituiert sein kann, ist, mit der Maßgabe, daß mindestens eine der Gruppen R¹, R², R³ oder R⁴ (-CH₂-CH₂-O)ₙ-CH₃ mit n=1 bis 3 ist, als Lösungsmittel in Elektrolytsystemen für Li-Ionen-Akkus, mit einem Leitsalz gemäß Anspruch 1.

Unter den obengenannten Estern der Formeln (I) bis (V) werden die Phosphorsäureester der Formel (III) bevorzugt eingesetzt.

Beispiele für die Gruppen R¹, R² und - sofern vorhanden - R³ und/oder R⁴ sind die Methyl-, Ethyl-, n- und Iso-Propyl-, n- und tert.-Butyl-, Cyclopentyl-, Cyclohexyl- sowie die Benzyl-Gruppe, sowie (-CH₂-CH₂-O)ₙ-CH₃ mit n=1 bis 3,wobei jedoch, wie bereits oben erwähnt, zu beachten ist, daß mindestens eine der Gruppen R¹, R², R³ oder R⁴ (CH₂-CH₂-O)ₙ-CH₃ mit n=1 bis 3, vorzugsweise 1 oder 2, ist.

Weiter bevorzugt werden Ester der allgemeinen Formeln (I) bis (V) eingesetzt, in denen R¹, R² und - sofern vorhanden - R³ und/oder R⁴ gleich sind und -CH₂-CH₂O-CH₃ oder (-CH₂-CH₂-O)₂-CH₃ bedeuten, wobei auch hier wiederum die entsprechenden Phosphorsäureester bevorzugt sind.

Beispiele für besonders bevorzugt verwendete Verbindungen stellen die Verbindungen der Formeln (Ia) bis (Va) dar.

B (― OCH₂ ― CH₂OCH₃)₃ (Ia)

O = C (― OCH₂CH₂OCH₃)₂ (IIa)

O = P(― O ― CH₂ ― CH₂ ― O ― CH₃)₃ (IIIa)

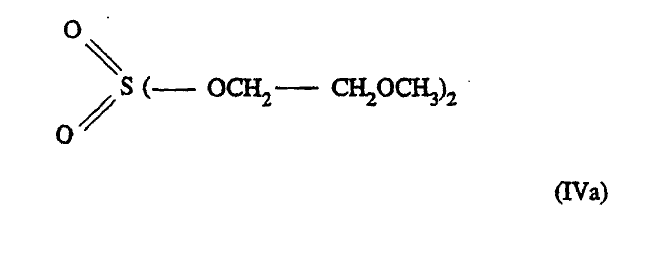

und

Si(-O-CH₂-CH₂-OCH₂)₄ (Va)

Die hierin verwendeten Ester sind bezüglich ihrer Eigenschaften außerordentlich gut als Lösungsmittel in Elektrolytsystemen für Li-Ionen-Akkus geeignet und weisen im allgemeinen eine Viskosität bei Raumtemperatur von ≤ 10 mPas, vorzugsweise ≤ 5 mPas und insbesondere ≤ 3 mPas auf. Sie besitzen Siedepunkte von im allgemeinen ungefähr 200 °C oder höher, vorzugsweise ungefähr 250 °C oder höher und insbesondere ungefähr 300 °C oder höher, jeweils gemessen bei Atmosphärendruck auf und weisen bei den bei ihrer Verwendung auftretenden Temperaturen von ca. -50°C bis ca. 150°C einen ausreichend niedrigen Dampfdruck, von ungefähr ca 10⁻⁵ bis ca. 10⁰ mbar auf, so daß sie sich nicht negativ auf die Eigenschaften des Li-Ionen-Akkus auswirken. Bedingt durch ihre Siedepunkte sind sie destillierbar und können somit bei ihrer Herstellung in hoher Reinheit erhalten werden. Darüber hinaus sind diese Ester über einen weiten Temperaturbereich hinweg bei Atmosphärendruck flüssig, wobei sie im allgemeinen bis zu einer Temperatur von ungefähr -30 °C, vorzugsweise bis zu ungefähr -40 °C, noch flüssig sind. Die hierin beschriebenen Ester können als Lösungsmittel in Elektrolytsystemen für Li-Ionen-Akkus bei mindestens ungefähr 80 °C, vorzugsweise bei mindestens ungefähr 120 °C, weiter bevorzugt bei mindestens ungefähr 150°C eingesetzt werden.

Selbstverständlich können die erfindungsgemäß verwendeten Ester auch als Gemisch mit bekannten Lösungsmitteln für Elektrolytsysteme, wie z.B. den eingangs erwähnten Alkylethern, wie z.B. Dimethylether, Diethylether, Dioxalan, Diglyme, Tetraglyme, 1,2-Dimethoxyethan, Tetrahydrofuran, 2-Methyltetrahydrofuran, usw., und Alkylencarbonaten, wie z.B. Ethylencarbonat, Propylencarbonat, Butylencarbonat, γ-Butyrolacton, und linearen Estern, wie z.B. Diethylcarbonat, Dimethylcarbonat, usw. eingesetzt werden. Dabei kann auch hier eine Kombination aus mindestens einem der erfindungsgemäß verwendeten Ester mit mindestens einem weiteren, aus dem Stand der Technik bekannten Lösungsmittel verwendet werden.

Bevorzugt sind Lösungsmittelkombinationen, die eine ausreichend geringe Viskosität besitzen, in der Lage sind, die Ionen der Leitsalze stark zu solvatisieren, über einen weiten Temperaturbereich hinweg flüssig sind und in ausreichender Weise elektrochemisch und chemisch stabil sowie hydrolysebeständig sind.

Darüber hinaus lassen sich die erfindungsgemäß verwendeten Ester auch in Kombination mit Polymer-Elektrolyten, wie z.B. Polymerisationsprodukte, von Borsäure-, Kohlensäure-, Kieselsäure, Phosphorsäure- und Schwefelsäureestern, die in der Regel so beschaffen sind, daß mindestens eine der Estergruppen eine polymerisierbare Einheit, wie z.B. eine C=C-Doppelbindung aufweist, und/oder Estern der entsprechenden Polysäuren, wie z.B. Polyphosphor- oder Polykieselsäureester, und/oder anderen herkömmlichen Polymer-Elektrolyten verwendet werden, wobei der Gehalt der erfindungsgemäß verwendeten Ester ungefähr 5 bis 100 Gew.- %, vorzugsweise ungefähr 20 Gew.- % bis 100 Gew.- % und weiter bevorzugt ungefähr 60 Gew.- % bis 100 Gew.- %, wobei sich die Gesamtmenge aus Ester und Polymer-Elektrolyt jeweils auf 100 Gew.- % addiert.

Die erfindungsgemäß verwendeten Ester werden nach herkömmlichen Verfahren, wie sie beispielsweise in K. Mura Kami in Chem. High Polymers (Japan), 7, S. 188-193 (1950) und in H. Steinberg Organoboron Chemistry, Kapitel 5, J. Wiley&Sons, N.Y. 1964 beschrieben sind hergestellt. Dabei wird im allgemeinen von den den Estern zugrundeliegenden Säuren, Säureanhydriden oder Chloriden, wie z.B. Borsäure, C(O)Cl₂, POCl₃, SO₂Cl₂ und SiCl₄ ausgegangen und diese in bekannter Weise mit den entsprechenden ein- oder mehrwertigen Alkoholen oder Etherolen umgesetzt.

Beispielhaft an der Herstellung eines Phosphorsäureesters wird in Beispiel 1a auch ein verbessertes Verfahren beschrieben, in dem als HCl-Fänger ein Trialkylamin verwendet wird, das nach der Synthese rückgewinnbar ist. Durch dieses Verfahren ist der Phosphorsäureester in höherer Reinheit herstellbar.

Dieses Konzept kann auch auf die anderen, hierin beschriebenen Ester übertragen werden.

Demgemäß ist ein Verfahren zur Herstellung eines Esters der Formel (I) bis (V), wie oben definiert, dadurch gekennzeichnet, daß als Ausgangsmaterial ein Chlorid eingesetzt wird und ein Trialkylamin als Fänger für während der Herstellung des Esters gebildete HCl verwendet wird.

Prinzipiell kann dabei jedes geeignete Trialkylamin eingesetzt werden. Vorzugsweise wird Trimethylamin, Triethylamin, Tripropylamin oder eine Mischung aus zwei oder mehr davon eingesetzt. Besonders bevorzugt wird Triethylamin eingesetzt.

Vorzugsweise kann der Fänger leicht vom Produkt, d.h. dem Ester, abgetrennt werden. In einer bevorzugten Ausführungsform wird der Fänger vom Produkt in einem Scheidetrichter abgetrennt und dann destillativ regeneriert.

Die erfindungsgemäß verwendeten Ester werden in Kombination mit für Li-Ionen-Akkus bislang verwendeten Leitsalzen, wie sie beispielsweise in der EP-A 0 096 629 beschrieben sind, kombiniert. Insbesondere bevorzugt wird die Kombination der Ester der Formeln (Ia) bis (IVa) in Kombination mit LiBF₄ als Leitsalz eingesetzt, wobei hier wiederum die Kombination des Esters der Formel (IIIa) mit LiBF₄ als Leitsalz besonders bevorzugt ist.

Die vorliegende Erfindung betrifft folglich eine Zusammensetzung umfassend:
(A) mindestens eine Verbindung der allgemeinen Formel (I) bis (V), wie in oben definiert sowie
(B) ein Leitsalz oder eine Mischung aus LiBF₄ und LiPF₆ mit einem bevorzugten molaren Verhältnis LiBF₄:LiPF₆ im Bereich von 0,1:9,9 bis 9,9:0,1.

Die Lösung der Verbindung (B) in Verbindung (A) ist im allgemeinen ungefähr 0,2 bis ungefähr 3 molar, vorzugsweise ungefähr 0,5 bis ungefähr 2 molar, weiter bevorzugt ungefähr 0,7 bis ungefähr 1,5 molar.

Darüber hinaus betrifft die vorliegende Erfindung die Verwendung der oben definierten Zusammensetzung als Elektrolytsystem in Li-Ionen-Akkus, sowie einen Li-Ionen-Akku, der eine Zusammensetzung, wie oben definiert, umfaßt.

Im Rahmen des erfindungsgemäßen Li-Ionen-Akkus können alle für Li-Ionen-Akkus gebräuchlichen Kathodenmaterialien, wie z.B. LiCoO₂, LiNiO₂, LiₓMnO₂ (0<x≤1), LiₓMn₂O4, (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2,5), LiₓV₂O₃ (0<x≤3,5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3,8), LiₓV₃S₅ (0<x≤1,8), LiₓTa₂S₂ (0<x≤1), LiₓFeS (0<x≤1), LiₓFeS₂ (0<x≤1), LiₓNbS₂ (0<x≤2,4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,5), LiₓFePS₂ (0<x≤1,5), sowie ein Gemisch aus zwei oder mehr davon, gegebenenfalls zusammen mit einem Bindemittel, wie z.B. Polytetrafluorethylen und Polyvinylidenfluorid, verwendet werden.

Auch als Anodenmaterial können alle herkömmlicherweise in Li-Ionen-Akkus verwendeten Anodenmaterialien, wie z.B. Metalle, wie z.B. metallisches Lithium, Lithium enthaltende Metallllegierungen, ein Metallsulfid oder ein kohlenstoffhaltiges Material verwendet werden, wobei kohlenstoffhaltige Materialien, die in der Lage sind, Lithiumionen zu speichern und abzugeben, ganz besonders bevorzugt sind. Als derartige kohlenstoffhaltige Materialien sind natürlicher und synthetischer Graphit oder amorpher Kohlenstoff, wie z.B. Aktivkohle, Kohlenstoff-Fasern, synthethisch graphitierter Kohlenstaub und Ruß zu nennen. Ferner können Oxide, wie z.B. Titanoxid, Zinkoxid, Zinnoxid, Molybdänoxid, Wolframoxid und Carbonate, wie z.B. Titancarbonat, Molybdäncarbonat und Zinkcarbonat verwendet werden.

Weitere Details bezüglich verwendbarer Anoden- und Kathodenmaterialien und der Herstellung der Li-Ionen-Akkus sind dem eingangs erwähnten Stand der Technik zu entnehmen.

Falls dies erforderlich ist, können dem erfindungsgemäßem Lösungsmittel auch Feststoffe wie z.B. SiO₂ und Al₂O₃ zugesetzt werden.

Die Herstellung der Li-Ionen-Akkus erfolgt im allgemeinen so, daß man die Ableiterelektroden mit dem Anoden- oder Kathodenmaterial beschichtet, Abstandshalter z.B. aus gerechtem Polypropylen einfügt, den Elektrolyten zugibt und anschließend dieses System bestehend aus Kathode, Anode, Abstandshalter und Elektrolyten wickelt und in ein Gehäuse einbringt.

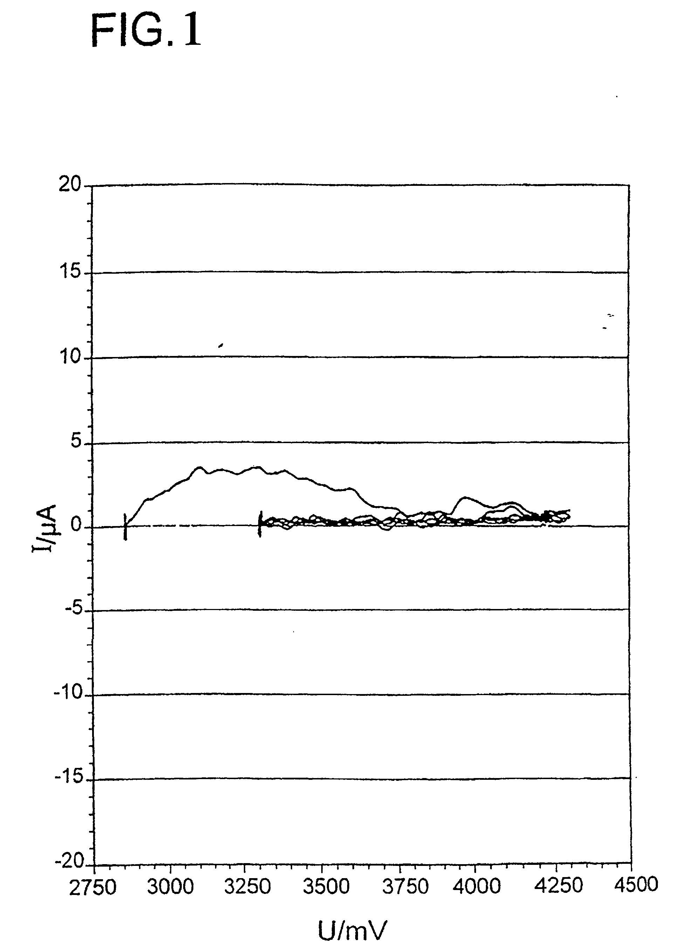

Die vorliegende Erfindung soll nunmehr anhand einiger erfindungsgemäßer Beispiele weiter unter Zuhilfenahme der Fig. 1 erläutert werden.

Fig. 1 zeigt ein Cyclovoltammogramm (CV) im Spannungsfenster 2,75 bis 4,5 Volt aufgenommen mit der Meßzelle gemäß Beispiel 2.

### BEISPIEL 1

Zur Herstellung des Phosphoresters der Formel O=P(-O-CH₂-CH₂-OCH₃)₃ wurden 274 g (3,6 mol) Methylglycol mit 2 g ZnCl₂ in einem 1.000 ml-Rundkolben vorgelegt und auf 5 °C abgekühlt. Anschließend wurden 153,33 g (1 mol) POCl₃ innerhalb von 50 min zugetropft, wobei die Temperatur bei ungefähr 5 °C bis 10 °C gehalten wurde. Nach dem Ende der Zugabe wurde eine klare Lösung erhalten, die man sich auf Raumtemperatur erwärmen ließ. Anschließend wurde das erhaltene Produktgemisch unter Vakuum (80 bis 90 mbar) bei ungefähr 50 °C bis 55 °C destilliert, um nicht umgesetztes Edukt und Nebenprodukte abzutrennen.

Anschließend wurde im Hochvakuum (ungefähr 0,2 mbar) bei einer Temperatur von ungefähr 170 °C weiter destilliert und das gewünschte Produkt erhalten. Der Wassergehalt des obigen Phosphoresters betrug 20 ppm.

### BEISPIEL 1a

Zur Herstellung des Phosphorsäureesters der Formel O=P(O-CH₂-CH₂-O-CH₃)₃ wurden 137 g (1,8 mol) Methylglycol mit 1 g ZnCl₂ in einem Kolben vorgelegt. Unter Stickstoff und unter Rühren wurden 570,75 g Toluol dazugegeben. Dann wurden 151,8 g Triethylamin zugetropft und der Kolbeninhalt auf 5°C abgekühlt. Anschließend wurden 76,7 g POCl₃ innerhalb von 30 min zugetropft, wobei die Temperatur auf ungefähr 5-10°C gehalten wurde. Nach dem Ende der Zugabe wurde die Kühlung abgestellt. Bei einstündigem Rühren stieg die Temperatur der Lösung auf 23°C.

Anschließend wurde auf 110°C aufgeheizt und unter Rückfluß ca. 1 bis 1,5 h gekocht und anschließend auf Raumtemperatur abgekühlt.

Unter kräftigem Rühren wurden dann 360 g einer 20-%igen NaOH-Lösung zugetropft und die erhaltene Lösung in einen Scheidetrichter gefüllt, in dem die Phasen getrennt wurden.

Aus der unteren, wäßrigen Phase wurde das Triethylamin unter Destillation regeneriert.

Aus der oberen, organischen Phase wurde unter Normaldruck zuerst destillativ das Toluol abgezogen. Anschließend wurde im Hochvakuum bei einem Druck von 0,3 mbar und bei einer Temperatur von ca. 170°C das Produkt, der Phosphorsäuretriester, destillativ abgetrennt.

Im Vergleich zu Beispiel 1 zeichnet sich der in diesem Beispiel eingeschlagene Syntheseweg durch ein Produkt aus, das einen geringeren Wassergehalt (15 ppm) aufweist. Ein weiterer Vorteil des Beispiels 1a liegt darin begründet, daß die Produktreinheit verbessert, d.h. der Anteil an Phosphorsäuretriester im Vergleich zum z.B. Phosphorsäurediester erhöht werden konnte.

### BEISPIEL 2

Mit dem Produkt der Zusammensetzung O=P(-O-CH₂-CH₂-O-CH₃)₃ und hochreinem Leitsalz LiBF₄ mit der Konzentration von 1 M in dem Ester O=P(-O-CH₂-CH₂-O-CH₃)₃ wurde unter Inertgas-Atmosphäre ein 0,1 M Elektrolyt hergestellt.

### Meßbedingungen:

Ausgehend vom Ruhepotential wurde mit einer Scangeschwindigkeit von 0,33 mV/sec
zunächst 4,3 V vs. Li/Li⁺ oxidiert und anschließend bis 3,3 V reduziert. Danach wurden noch 2 Vollzyklen in diesem Spannungsfenster abgefahren.

Wie die Fig. 1 zeigt, ist dieser Elektrolyt im Spannungsfenster der Lithiumionen-Batterie stabil und damit als Elektrolytsystem verwendbar.

## Patentansprüche

1. Zusammensetzung umfassend
(A) mindestens eine Verbindung (Ia) bis (Va)
B(OCH₂CH₂OCH₃)₃ (Ia)
OC(OCH₂CH₂OCH₃)₂ (IIa)
OP(OCH₂CH₂OCH₃)₃ (IIIa)
O₂S(OCH₂CH₂OCH₃)₂ (IVa)
Si(OCH₂CH₂OCH₃)₄ (Va)
sowie
(B) ein Leitsalz LiBF4 oder eine Mischung aus LiBF₄ und LiPF₆ mit einem molaren Verhältnis LiBF₄ : LiPF₆ von 0,1: 9,9 bis 9,9 : 0,1.

2. Li-Ionen-Akku umfassend eine Zusammensetzung gemäß Anspruch 1.

3. Verwendung einer Zusammensetzung gemäß Anspruch 1 als Elektrolytsystem in Li-Ionen-Akkus.

## Claims

1. A composition comprising:
(A) at least one compound (Ia) to (Va)
B(OCH₂CH₂OCH₃)₃ (Ia)
OC(OCH₂CH₂OCH₃)₂ (IIa)
OP(OCH₂CH₂OCH₃)₃ (IIIa)
O₂S(OCH₂CH₂OCH₃)₂ (Iva)
Si(OCH₂CH₂OCH₃)₄ (Va)
and
(B) a conducting salt or LiBF₄, a mixture of LiBF4 and LiPF6 with a molar ratio LiBF4 : LiPF6 of from 0.1 : 9.9 to 9.9 : 0.1.

2. An Li-ion storage cell comprising a composition as claimed in claim 1.

3. The use of a composition as claimed in claim 1 as an electrolyte system in Li-ion storage cells.

## Revendications

1. Composition comprenant :
(A) au moins un composé (Ia) à (Iva) :
B(OCH₂CH₂OCH₃)₃ (Ia)
OC(OCH₂CH₂OCH₃)₂ (IIa)
OP(OCH₂CH₂OCH₃)₃ (IIIa)
O₂S(OCH₂CH₂OCH₃)₂ (IVa)
Si(OCH₂CH₂OCH₃)₄ (Va)
ainsi que
(B) un sel conducteur LiBF₄ ou un mélange constitué de LiBF₄ et de LiPF₆ avec un rapport molaire LiBF₄:LiPF₆ de 0,1:9,9 à 9,9:0,1.

2. Accumulateur à ions Li comprenant une composition selon la revendication 1.

3. Utilisation d'une composition selon la revendication 1 en tant que système électrolytique dans les accumulateurs à ions Li.
